(19) Europäisches Patentamt
European Patent Office
Office européen des brevets

(11) EP 4 372 029 A1

(12) EUROPEAN PATENT APPLICATION
published in accordance with Art. 153(4) EPC

(43) Date of publication:
22.05.2024 Bulletin 2024/21

(21) Application number: 22842166.5

(22) Date of filing: 14.07.2022

(51) International Patent Classification (IPC):
C08G 69/00 (2006.01)    C08L 77/00 (2006.01)
B33Y 10/00 (2015.01)    B33Y 80/00 (2015.01)
B29C 64/153 (2017.01)    B29C 64/165 (2017.01)
B29C 64/314 (2017.01)    C08K 3/013 (2018.01)
B33Y 70/10 (2020.01)

(52) Cooperative Patent Classification (CPC):
B29C 64/153; B29C 64/165; B29C 64/314;
B33Y 10/00; B33Y 70/10; B33Y 80/00;
C08G 69/00; C08K 3/013; C08L 77/00

(86) International application number:
PCT/JP2022/027661

(87) International publication number:
WO 2023/286824 (19.01.2023 Gazette 2023/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 15.07.2021 JP 2021116833
27.04.2022 JP 2022072997
14.06.2022 JP 2022095953

(71) Applicant: Toray Industries, Inc.
Tokyo 103-8666 (JP)

(72) Inventors:
• NAKAMURA, Tomohiko
Nagoya-shi, Aichi 455-8502 (JP)
• IWATA, Hirokazu
Nagoya-shi, Aichi 455-8502 (JP)
• MATSUMOTO, Satoshi
Nagoya-shi, Aichi 455-8502 (JP)
• WATANABE, Kei
Nagoya-shi, Aichi 455-8502 (JP)
• KURATA, Mitsuru
Nagoya-shi, Aichi 455-8502 (JP)
• NISHIDA, Mikiya
Nagoya-shi, Aichi 455-8502 (JP)
• YOSHIKAWA, Takahiro
Nagoya-shi, Aichi 455-8502 (JP)
• ASANO, Itaru
Nagoya-shi, Aichi 455-8502 (JP)

(74) Representative: Mewburn Ellis LLP
Aurora Building
Counterslip
Bristol BS1 6BX (GB)

(54) POWDER COMPOSITION, METHOD FOR PRODUCING THREE-DIMENSIONALLY SHAPED ARTICLE BY POWDER BED MELT BONDING PROCESS USING POWDER COMPOSITION, AND THREE-DIMENSIONALLY SHAPED ARTICLE

(57) Provided are: a powder composition comprising a polyamide powder (A) and an inorganic reinforcing material (B), in which the polyamide powder (A) has a D50 particle diameter of 1 μm or more and 100 μm or less and a sphericity of 80 or more and 100 or less, the inorganic reinforcing material (B) has an average major axis diameter of 3 μm or more and 300 μm or less and an (average major axis diameter)/(average minor axis diameter) ratio of 1 or more and 15 or less, and the inorganic reinforcing material (B) is contained at an amount of 5% by weight or more and 60% by weight or less relative to the total weight of the powder composition; a method for producing a three-dimensional model object by a powder bed fusion method using the powder composition; and a three-dimensional model object. The powder composition comprises a specific polyamide powder and a specific inorganic reinforcing material, and therefore has a high flowability and can maintain the flowability at a satisfactory level even when used for recycling. When the powder composition is applied to three-dimensional modeling, a model object having both of a surface smoothness and a high elastic modulus can be obtained.

**Description**

Technical Field of the Invention

The present invention relates to a three-dimensional model object obtained by powder bed fusion method, a powder composition suitably used to obtain the object, and a method for producing a three-dimensional model object using the powder composition.

Background Art of the Invention

As technologies for producing three-dimensional model objects (hereinafter, sometimes referred to as model objects), material extrusion methods, powder bed fusion methods, liquid bath photopolymerization methods, sheet lamination methods, and the like are known. Among these, in the powder bed fusion method, after a layer of powder is provided, a three-dimensional model object is formed by selectively melting positions corresponding to the cross section of the object, and bonding and laminating these layers together. Here, as methods for selectively melting the powder, there are a selective laser sintering method using a laser, a selective absorption sintering method using a melting aid, a selective suppression sintering method which masks areas that are not to be melted, etc. The powder bed fusion method has advantages of being suitable for precision modeling and not requiring support members during modeling, as compared with other modeling methods.

The three-dimensional model objects obtained by the above-described methods are investigated for applications in various fields such as, for example, mobility applications such as automobiles, aviation, and space, medical applications such as prosthetics, orthotics, hearing aids, catheters, sports applications, electrical and electronic materials, and the like, by utilizing their good mechanical properties and dimensional accuracies. Among these, mobility applications require high thermal resistance and elastic modulus, so resin materials mixed with reinforcing materials are used in many cases, and similar properties are required even for three-dimensional model objects.

In response to such market demands, Patent document 1 discloses a three-dimensional model object having a higher elastic modulus than the case of only polyamide powder by blending glass beads into irregularly shaped powder of polyamide 11 or polyamide 12. Patent document 2 discloses a three-dimensional model object having high elastic modulus and thermal resistance by blending polyamide powder with predetermined glass fibers and powder flow agent.

Prior art documents

Patent documents

Patent document 1: JP-A-2008-266645
Patent document 2: JP-A-2020-536153

Summary of the Invention

Problems to be solved by the Invention:

However, in the technology disclosed in Patent document 1, since the polyamide powder has an irregular shape and insufficient flowability, it is not possible to incorporate a large amount of reinforcing material, and the elastic modulus of the obtained model object is less than 3,000 MPa, and it is insufficient for the application of the present invention requiring an elastic modulus of 3,500 MPa or more.

In the technology disclosed in Patent document 2, since glass fibers are blended into irregularly shaped polyamide powder, the elastic modulus becomes nigh but the flowability is poor, the surface of the model object does not become sufficiently smooth, and further, there is a problem that the glass fibers are entangled when recycling and using the powder used for modeling, thereby reducing the flowability.

Accordingly, an object of the present invention is to realize a high flowability and maintain the flowability at a satisfactory level even when used for recycling by a powder composition comprising a specific polyamide powder and a specific inorganic reinforcing material, and to provide a model object achieving both of an excellent surface smoothness and a high elastic modulus when the powder composition is applied to three-dimensional modeling.

Means for solving the Problems:

To achieve the above-described object, the present invention has the following constitutions.

Namely, a powder composition according to the present invention comprises a polyamide powder (A) and an inorganic reinforcing material (B), wherein the polyamide powder (A) has a D50 particle diameter of 1 μm or more and 100 μm or less and a sphericity of 80 or more and 100 or less, the inorganic reinforcing material (B) has an average major axis diameter of 3 μm or more and 300 μm or less and an (average major axis diameter)/(average minor axis diameter) ratio of 1 or more and 15 or less, and the inorganic reinforcing material (B) is contained at an amount of 5% by weight or more and 60% by weight or less relative to the total weight of the powder composition.

Further, a method for producing a three-dimensional model object according to the present invention is a method for producing a three-dimensional model object by powder bed fusion method using the above-described powder composition.

Furthermore, a three-dimensional model object according to the present invention is a three-dimensional model object obtained by powder bed fusion method, which has a surface roughness of 20 μm or less, an elastic modulus in an X direction of 3,500 MPa or more, and an average sphere equivalent diameter of voids observed by X-ray CT imaging of 1 μm or more and 100 μm or less.

Effect according to the Invention:

According to the present invention, it is possible to realize a high flowability and maintain the flowability at a satisfactory level even when used for recycling by a powder composition comprising a specific polyamide powder and a specific inorganic reinforcing material, and to obtain a model object achieving both of an excellent surface smoothness and a high elastic modulus when the powder composition is applied to three-dimensional modeling.

Brief explanation of the drawings

[Fig. 1] Fig. 1 is a schematic diagram showing an example of a device for producing a three-dimensional model object in the present invention.

[Fig. 2] Fig. 2 shows a photograph taken by a scanning electron microscope of a powder composition prepared in Example 2.

Embodiments for carrying out the Invention

Hereinafter, the present invention will be explained in detail together with embodiments.

Conventionally, the elastic modulus of a three-dimensional model object depends on the amount and shape of the reinforcing material contained in a powder composition, which is a raw material, and in order to prepare a composition that can obtain a model object with a high elastic modulus, it is required to blend a large amount of reinforcing material, because the flowability of the powder composition decreases, the surface roughness of the model object increases, and it is not possible to achieve both surface smoothness and elastic modulus. Furthermore, there is a problem that use for recycling becomes difficult due to the agglomeration of the reinforcing material or the like.

However, even with a powder composition which can obtain a three-dimensional model object with a high elastic modulus of 3,500 MPa or more, in case where the polyamide powder and the reinforcing material satisfy certain conditions, a high flowability can be maintained even when used for recycling, and when it is applied to three-dimensional modeling, it is possible to obtain a model object which can achieve both high elastic modulus and high surface smoothness. Further, surprisingly, it has been found that by mechanically suppressing crystallization shrinkage during the formation of a three-dimensional model object, a modeled object without warping and with excellent dimensional accuracy can be obtained.

Namely, a powder composition according to the present invention comprises a polyamide powder (A) and an inorganic reinforcing material (B), the D50 particle diameter of the above (A) is 1 μm or more and 100 μm or less, the sphericity is 80 or more and 100 or less, the average major axis diameter of the above (B) is 3 μm or more and 300 μm or less, the average major axis diameter/average minor axis diameter is 1 or more and 15 or less, and the above (B) is contained at an amount of 5% by weight or more and 60% by weight or less relative to the total weight of the powder composition.

Hereinafter, the powder composition of the present invention will be explained in detail.

The composition in the present invention contains a polyamide powder composed of polyamide having a structure containing an amide group. As specific examples of such polyamides, exemplified are polycaproamide (polyamide 6), polyundecamide (polyamide 11), polylauramide (polyamide 12), polyhexamethylene adipamide (polyamide 66), polydecamethylene sebacamide (polyamide 1010), polydodecamethylene sebacamide (polyamide 1012), polydodecamethylene dodecamide (polyamide 1212), polyhexamethylene sebacamide (polyamide 610), polyhexamethylene dodecamide (polyamide 612), polydecamethylene adipamide (polyamide 106), polydodecamethylene adipamide (polyamide 126), polyhexamethylene terephthalamide (polyamide 6T), polydecamethylene terephthalamide (polyamide 10T), polydodecamethylene terephthalamide (polyamide 12T), polycaproamide/polyhexamethylene adipamide copolymer (polyamide 6/66), polycaproamide/polylauramide copolymer (polyamide 6/12), and the like. Among these, from the viewpoint of easy controlling into a true spherical shape, preferably exemplified are polycaproamide (polyamide 6), polyundecamide (polyamide 11), polylauramide (polyamide 12), polyhexamethylene adipamide (polyamide 66), polydecamethylene sebacamide (polyamide 1010), polydodecamethylene sebacamide (polyamide 1012), polydodecamethylene dodecamide (polyamide 1212), polyhexamethylene sebacamide (polyamide 610), polyhexamethylene dodecamide (polyamide 612), and the like. Further, from the viewpoint of having a thermal property suitable to modeling, particularly preferred are polycaproamide (polyamide 6), polyundecamide (polyamide 11), polylauramide (polyamide 12), polyhexamethylene adipamide (polyamide 66), polyhexamethylene sebacamide (polyamide 610), polydecamethylene sebacamide (polyamide 1010), and polydodecamethylene sebacamide (polyamide 1012). Among these, polycaproamide (polyamide 6), polyhexamethylene adipamide (polyamide 66), and polyhexamethylene sebacamide (polyamide 610) are extremely preferable in terms of thermal resistance during modeling.

The polyamide may be copolymerized within a range which the effects of the present invention are not impaired. As the copolymerizable component, an elastomer component such as polyolefin or polyalkylene glycol that imparts a flexibility, and a rigid aromatic component that improves a thermal resistance and a strength, can be appropriately selected. Further, as described later, a copolymerization component which adjusts the terminal groups may be used in order to reuse the polymer powder by powder bed fusion method. As such copolymerization components, monocarboxylic acids such as acetic acid, hexanoic acid, lauric acid, and benzoic acid, and monoamines such as hexylamine, octylamine, and aniline, can be exemplified.

The weight average molecular weight of the polyamide is preferably in the range of 10,000 to 1,000,000. The higher the weight average molecular weight is, the slower the crystallization rate becomes, which can suppress warping due to crystallization during modeling, and therefore, the lower limit is preferably 20,000 or more, more preferably 30,000 or more, and further preferably 40,000 or more, particularly preferably 45,000 or more, and most preferably 50,000 or more. If the molecular weight is too high, the viscosity becomes high and the dispersibility and uniformity of the reinforcing material during modeling deteriorate, so the upper limit is preferably 700,000 or less, more preferably 500,000 or less, further preferably 300,000 or less, particularly preferably 200,000 or less, and most preferably 100,000 or less.

Where, the weight average molecular weight of the polyamide constituting the polyamide powder indicates a value determined by measuring a weight average molecular weight by gel permeation chromatography using hexafluoro isopropanol as a solvent and converting it with polymethyl methacrylate.

The polyamide powder composition of the present invention may be added with other compounding materials within a range which the effects of the present invention are not impaired. As the compounding materials, for example, antioxidants and thermal stabilizers can be exemplified in order to suppress thermal deterioration caused by heating during modeling using the powder bed fusion method. As the antioxidants and thermal stabilizers, for example, exemplified are hindered phenol, hydroquinone, phosphite group and substituted products thereof, phosphite, hypophosphite, and the like. As others, exemplified are pigments and dyes for coloring, plasticizers for adjusting viscosity, flow aids for improving flowability, antistatic agents for adding functionality, flame retardants carbon black, silica, titanium dioxide, potassium titanate, fillers such as glass fibers, glass beads, carbon fibers, and cellulose nanofibers, and the like. Known materials can be used for these, and they may be present either inside or outside the polyamide powder.

The D50 particle diameter of the polyamide powder of the present invention is in the range of 1 to 100 $\mu$m. If the D50 particle diameter exceeds 100 $\mu$m, the particle size becomes larger than a stacking height of the powder layer during modeling and the surface becomes rough. If the D50 particle diameter is less than 1 $\mu$m, because the particles are so fine, they easily adhere to a recoater or the like during modeling, and the temperature of a modeling chamber cannot be elevated to a required temperature. The upper limit of the D50 particle diameter of the polyamide powder is preferably 90 $\mu$m or less, more preferably 80 $\mu$m or less, and further preferably 70 $\mu$m or less. The lower limit is preferably 5 $\mu$m or more, more preferably 20 $\mu$m or more, and further preferably 30 $\mu$m or more.

Where, the D50 particle diameter of the polyamide powder is a particle diameter at which the cumulative frequency from the small particle diameter side of the particle diameter distribution measured by a laser diffraction particle diameter distribution analyzer becomes 50% (D50 particle diameter).

The particle diameter distribution of the polyamide powder is represented by D90/D10, which is a ratio of D90 to D10 of the particle diameter distribution, and is preferably less than 5.0. A narrower particle diameter distribution is preferable because it eliminates differences in meltability during modeling due to differences in particle diameter, and it also facilitates uniform dispersion of the inorganic reinforcing material, making it possible to obtain homogeneous model objects. Therefore, D90/D10 is more preferably less than 4.0, further preferably less than 3.0, and particularly preferably less than 2.0. Further, the lower limit value is theoretically 1.0.

D90/D10, which indicates the particle diameter distribution of the polyamide powder in the present invention, is defined as a value determined by dividing the particle diameter (D90) at which the cumulative frequency from the small particle diameter side of the particle diameter distribution measured by the laser diffraction particle diameter distribution analyzer described above becomes 90%, by the particle diameter (D10) at which the cumulative frequency from the small particle diameter side becomes 10%.

The sphericity, which indicates the degree of the sphericity of the polyamide powder of the present invention, is 80 or more and 100 or less. In case where the sphericity is less than 80, the flowability deteriorates and the surface of the model object becomes rough. The sphericity is preferably 85 or more and 100 or less, more preferably 90 or more and 100 or less, further preferably 93 or more and 100 or less, particularly preferably 95 or more and 100 or less, and extremely preferably 97 or more and 100 or less.

Where, the sphericity of the polyamide powder of the present invention is determined by randomly observing 30 particles from a photograph taken with a scanning electron microscope, using the minor axis diameters and the major axis diameters thereof and calculating it according to the following equation.

[Equation 1]

$$S = \sum_{i=1}^{n} (b/a)/\mathrm{n} \times 100$$

Where, in the above-described equation, S: sphericity, a: major axis diameter, b: minor axis diameter, and n: number of measurements which is 30.

The surface smoothness and internal solidity of the polyamide powder of the present invention can be represented by BET specific surface area determined based on gas adsorption. It is preferred for the surface of the polymer powder to be smooth and the inside to be solid, since the surface area becomes small, the flowability is improved, and the surface of the model object becomes smooth. Here, it means that the smoother the surface, the smaller the BET specific surface area. Concretely, the BET specific surface area is preferably 10 $m^2/g$ or less, more preferably 5 $m^2/g$ or less, further preferably 3 $m^2/g$ or less, particularly preferably 1 $m^2/g$ or less, most preferably 0.5 $m^2/g$ or less. Further, the lower limit is theoretically 0.05 $m^2/g$ in case where the particle diameter is 100 $\mu$m.

Where, the BET specific surface area is measured in accordance with the Japanese Industrial Standard (JIS standard) JIS R 1626 (1996) "Method for measuring specific surface area by gas adsorption BET method".

The solidity of the polyamide powder of the present invention can also be evaluated by the following equation showing a ratio of the BET specific surface area to the theoretical surface area calculated from D50 particle diameter. The closer the above-described ratio is to 1, the more adsorption occurs only on the outermost surface of the particle, and therefore, it indicates that the particle has a smoother surface and is a solid particle. The surface area ratio in the following equation is preferably 5 or less, more preferably 4 or less, further preferably 3 or less, and most preferably 2 or less. Further, the lower limit value is theoretically 1.

[Equation 2]

$$R = AD\alpha/6$$

Where, In the above-described equation, R: surface area ratio, D: D50 particle diameter, $\alpha$: density of polyamide, and A: BET specific surface area.

For the production of the polyamide powder of the present invention, the method described in International Publication No. 2018/207728 previously disclosed by the present inventors can be used, in which the polyamide monomer is polymerized at a temperature higher than the crystallization temperature of polyamide in the presence of a polymer that is incompatible with polyamide, and thereafter, the polyamide powder is produced by washing and drying.

The polyamide powder preferably used in the present invention has a content of subcomponents used in the process for producing the polyamide powder or the like of less than 0.1% by mass. Since such subcomponents cause a decrease in the flowability and recyclability of the powder composition, their content is more preferably less than 0.05% by mass, further preferably less than 0.01% by mass, particularly preferably less than 0.007% by mass, extremely preferably less than 0.004% by mass, and most preferably less than 0.001% by mass. Where, the content of such subcomponents can be analyzed by a known method, and for example, after extracting them from polyamide powder with water or an organic solvent, and removing the solvent, they can be quantified by gel permeation chromatography using water as a solvent.

The obtained polyamide powder may be additionally subjected to heat treatment within a range that does not impair the effects of the present invention. Known methods can be used as the heat treatment method, and normal pressure heat treatment using an oven or the like, reduced pressurized heat treatment using a vacuum dryer or the like, or pressure heat treatment in which the material is heated together with water in a pressurized vessel such as an autoclave can be appropriately selected. By heat treatment, it is possible to control the molecular weight, crystallinity and melting point of polyamide within the desired ranges.

The powder composition in the present invention is characterized by containing an inorganic reinforcing material composed of an inorganic compound. The inorganic reinforcing material may be dry blended with the polyamide powder, or may be contained inside the polyamide powder, but from the viewpoint of controlling the polyamide powder into a true spherical shape and improving the flowability, dry blending is preferred.

As such inorganic reinforcing materials, for example, exemplified are glass-based fillers such as glass fibers, glass beads, glass flakes and foamed glass beads, calcined clays such as nepheline syenite fine powder, montmorillonite and bentonite, clays such as silane-modified clays (silicic acid aluminum powder), silicic acid-containing compounds such as talc, diatomaceous earth and silica sand, crushed natural minerals such as pumice powder, pumice balloon, slate powder and mica powder, minerals such as barium sulfate, lithopone, calcium sulfate, molybdenum disulfide and graphite, silica (silicon dioxide) such as fused silica, crystalline silica and amorphous silica, alumina such as alumina (aluminum oxide), alumina colloid (alumina sol) and alumina white, calcium carbonate such as light calcium carbonate, heavy calcium carbonate, pulverized calcium carbonate and special calcium carbonate-based fillers, fly ash spheres, volcanic glass hollow materials, synthetic inorganic hollow materials, single crystal potassium titanate, potassium titanate fibers, carbon fibers, carbon nanotubes, carbon hollow sphere, fullerene, anthracite powder, cellulose nanofibers, artificial cryolite (cryolite), titanium oxide, magnesium oxide, basic magnesium carbonate, dolomite, calcium sulfite, mica, asbestos, calcium silicate, molybdenum sulfide, boron fibers, silicon carbide fibers, etc. Glass-based fillers, minerals and carbon fibers are preferred because they are hard and have a large strength-improving effect, and glass-based fillers are more preferred because they have a narrow particle diameter distribution and fiber diameter distribution. These inorganic reinforcing materials can be used alone or in combination of two or more.

As elements constituting such inorganic reinforcing materials, generally exemplified are sodium, potassium, magnesium, calcium, barium, titanium, iron, aluminum, zinc, boron, silicon, oxygen, etc., but they have high rigidity and heat resistance. It is preferable to contain silicon and aluminum, and it is more preferred to contain silicon, aluminum, magnesium and calcium because they can contribute to have a high rigidity and improve a thermal resistance. As concrete examples of inorganic reinforcing materials containing silicon and aluminum, exemplified are mica, kaolin clay, montmorillonite, glass-based fillers, etc., and as concrete examples of inorganic reinforcing materials containing silicon, aluminum, magnesium and calcium, exemplified are glass-based fillers, etc.

In the present invention, the elements constituting the inorganic reinforcing material can be determined from spectrum data detected by an energy dispersive X-ray analyzer.

As examples of glass-based fillers preferably used in the present invention, exemplified are glass fibers, glass beads, glass flakes, foamed glass beads, etc., but from the viewpoint of capable of making a three-dimensional model object exhibit a high elastic modulus, glass fibers, glass beads, or mixtures thereof are more preferred. Among these, from the viewpoint of capable of suppressing a warpage of the model object, glass fibers or mixtures of glass fibers and glass beads are particularly preferred. Furthermore, from the viewpoint that the model object has a high strength, glass fibers are extremely preferred. The glass fibers may have a circular cross section or a flat cross section. Further, from the viewpoint that the strength anisotropy of the model object is small, glass beads are extremely preferred.

In order to improve the adhesion between the inorganic reinforcing material and the polyamide powder, it is possible to use an inorganic reinforcing material which has been subjected to a surface treatment within a range that does not impair the effects of the present invention. As examples of such surface treatments, silane coupling agents such as amino silane, epoxy silane, acrylic silane can be exemplified. These surface treatment agents may be immobilized on the surface of the inorganic reinforcing material by a coupling reaction, or may be coated on the surface of the inorganic reinforcing material, but preferably the surface treatment agents are immobilized by a coupling reaction because it is difficult to be modified by heat or the like.

The average major axis diameter of the inorganic reinforcing material of the present invention is in the range of 3 to 300 μm. If the average major axis diameter exceeds 300 μm, it is not preferable because unevenness due to the inorganic reinforcing material appears from the modeling surface, and it impairs the surface smoothness. If the average major axis diameter is less than 3 μm, it is not preferred because it cannot contribute to improving the elastic modulus. The upper limit of the average major axis diameter of the inorganic reinforcing material is preferably 250 μm or less,

more preferably 200 $\mu$m or less, further preferably 150 $\mu$m or less, particularly preferably 120 $\mu$m or less, extremely preferably 100 $\mu$m or less, and most preferably 90 $\mu$m or less. The lower limit is preferably 5 $\mu$m or more, more preferably 10 $\mu$m or more, further preferably 15 $\mu$m or more, particularly preferably 20 $\mu$m or more, and extremely preferably 30 $\mu$m or more.

The shape of the inorganic reinforcing material of the present invention is represented by average major axis diameter/average minor axis diameter, which is the ratio of average major axis diameter to average minor axis diameter, and it is 1 or more and 15 or less. If the average major axis diameter/average minor axis diameter exceeds 15, the orientation in the X direction in the model object, which will be described later, becomes remarkable and the intensity anisotropy between with the X direction and the Z direction becomes large, which is not preferred. Therefore, the average major axis diameter/average minor axis diameter is preferably 13 or less, more preferably 12 or less, and further preferably 10 or less. Further, the lower limit value is theoretically 1. Among these, from the viewpoint that the reinforcing material mechanically suppresses crystallization shrinkage when a three-dimensional model object is formed, so that a model object with an excellent dimensional accuracy without warping can be obtained, it is particularly preferably 2 or more and 10 or less, extremely preferably 3 or more and 10 or less, and most preferably 4 or more and 10 or less. Further, from the viewpoint of reducing the anisotropy, it is particularly preferably 1 or more and 5 or less, extremely preferably 1 or more and 3 or less, and most preferably 1 or more and less than 2.

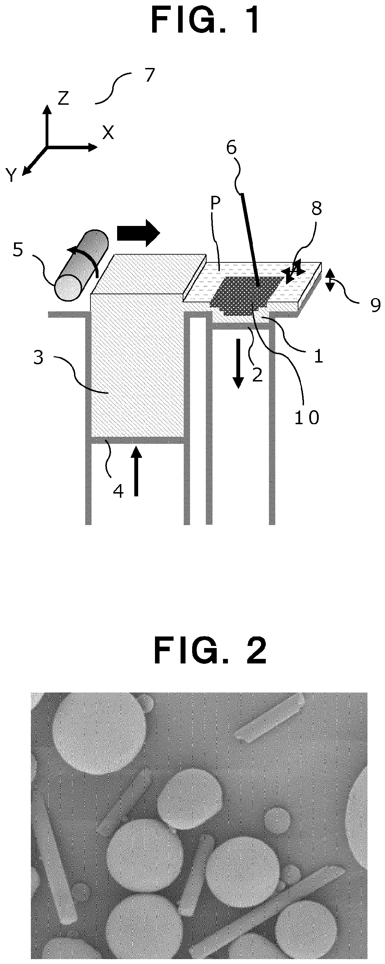

Where, in the present invention, the average major axis diameter and average minor axis diameter of the inorganic reinforcing material are number average values of major axis diameters and minor axis diameters determined by observing 100 fibers or particles randomly selected from a photograph obtained by imaging the inorganic reinforcing material with a scanning electron microscope. The major axis diameter is a diameter at which the distance between two parallel lines becomes maximum when the particle image is sandwiched between two parallel lines, and the minor axis diameter is a diameter at which the distance between two parallel lines becomes minimum when the particle image is sandwiched between two parallel lines in a direction perpendicular to the major axis diameter. When measuring the average major axis diameter and average minor axis diameter of an inorganic reinforcing material, the major axis diameters and minor axis diameters may be measured by selecting inorganic reinforcing materials from a scanning electron microscope photograph of a powder composition as shown in Fig. 2.

The blending amount of such inorganic reinforcing materials is 5% by weight or more and 60% by weight or less relative to the total weight of the powder composition. The upper limit of the blending amount is preferably 55% by weight or less, and more preferably 50% by weight or less. Further, the lower limit of the blending amount is preferably 10% by weight or more, more preferably 15% by weight or more, and further preferably 20% by weight or more. If the blending amount of the inorganic reinforcing material is 5% by weight or more, it is possible to improve the elastic modulus and strength of the model object obtained by three-dimensionally modeling the powder composition. Further, if the blending amount of the inorganic reinforcing material is 60% by weight or less, the flowability of the powder composition is not deteriorated and a model object with an excellent surface smoothness tends to be obtained.

The powder composition of the present invention preferably contains a flow aid in order to improve its flowability. The flow aid indicates a substance which suppresses powder agglomeration due to the adhesive force between powders. By containing such a flow aid, the flowability of the powder composition can be improved, that is, the angle of repose, which is an index of flowability described later, can be improved within a desired range, and it tends to be achieved that defects that cause a decrease of mechanical properties can be reduced and the appearance of a model object to be obtained can be more improved.

As such flow aids, for example, exemplified are silica (silicon dioxide) such as fused silica, crystalline silica and amorphous silica, alumina such as alumina (aluminum oxide), alumina colloid (alumina sol) and alumina white, calcium carbonate such as light calcium carbonate, heavy calcium carbonate, pulverized calcium carbonate and special calcium carbonate-based fillers, titanium oxide, magnesium oxide, basic magnesium carbonate, potassium titanate fibers, boron fibers and silicon carbide fibers. More preferably, exemplified are silica, alumina, calcium carbonate powder and titanium oxide. Particularly preferably, silica is exemplified since it is hard and can contribute to improve strength and flowability.

As commercial products of such silica, exemplified are fumed silica "AEROSIL" (registered trademark) series supplied by NIPPON AEROSIL Co., Ltd., dry silica "REOLOSIL" (registered trademark) series supplied by Tokuyama Corporation, and sol-gel silica powder X-24 series supplied by Shin-Etsu Chemical Co., Ltd.

The D50 particle diameter of such a flow aid is preferably 20 nm or more and 3000 nm or less. The upper limit of the D50 particle diameter of the flow aid is more preferably 2,000 nm, further preferably 1,000 nm, particularly preferably 500 nm, extremely preferably 300 nm, and most preferably 200 nm. The lower limit is more preferably 30 nm, further preferably 50 nm, particularly preferably 100 nm, extremely preferably 120 nm, and most preferably 140 nm. If the D50 particle diameter of the flow aid is within the above-described range, it tends to improve the flowability of the powder composition and to evenly disperse the flow aid in the powder composition.

The D50 particle diameter of the flow aid in the present invention is a particle diameter (D50) at which the cumulative curve from the small particle diameter side becomes 50%, after obtaining the cumulative curve by analyzing the laser scattered ray using the dynamic ray scattering method, taking the total volume of fine particles as 100%.

The blending amount of such a flow aid is preferably 0.01% by weight or more and 2.0% by weight or less relative to the total weight of the powder composition. The upper limit of the blending amount is more preferably 1.5% by weight or less, further preferably 1.0% by weight or less, particularly preferably 0.8% by weight or less, and extremely preferably 0.7% by weight or less. Further, the lower limit of the blending amount is more preferably 0.02% by weight or more, further preferably 0.03% by weight or more, and particularly preferably 0.04% by weight or more. If the blending amount of the flow aid is 0.01% by weight or more, the flowability of the powder composition is further improved, and the filling property when modeled increases, so voids that cause defects in mechanical properties are less likely to occur, and a model object to be obtained tends to exhibit a high strength. Further, if the blending amount of the flow aid is 2.0% by weight or less, obstruction of sintering due to the flow aid coating the surface of the polyamide powder does not occur, and a model object having a high strength tends to be obtained.

The powder composition of the present invention is preferably a powder mixture dry blended with an inorganic reinforcing material and, as needed, a flow aid or other additives to the aforementioned polyamide powder, but it may be one in which an inorganic reinforcing material is kneaded into the polyamide powder. If an excessive shearing force is applied when blending, the inorganic reinforcing material may be deficient, so it is preferred to select a mixing method that does not apply excessive shearing force. Alternatively, a powder composition containing the inorganic reinforcing material therein may be prepared by a method such as one of powdering a polyamide resin into which the inorganic reinforcing material has been kneaded.

One of the effects of the powder composition of the present invention is that the powder composition exhibits a high flowability. Any known measuring method can be employed for the index. A concrete example is an angle of repose, and it is preferred that the angle is 60 degrees or less. It is more preferably 50 degrees or less, further preferably 40 degrees or less, and particularly preferably 35 degrees or less. The lower limit is usually 30 degrees or more. The powder composition of the present invention is suitable for producing a three-dimensional model object using a powder bed fusion method, due to its high flowability.

The filling property of the powder composition of the present invention can be indicated as a bulk filling rate, wherein, when a true density of the polyamide powder (A) is referred to T(A), a true density of the inorganic reinforcing material (B) is referred to T(B), a content of the inorganic reinforcing material (B) is referred to X(B), and a bulk density of the powder composition is referred to D, the bulk filling rate can be represented by $D/\{T(A) \times (100-X(B))/100 + T(B) \times X(B)/100\}$. The bulk filling rate of the powder composition of the present invention is preferably 0.40 or more and 0.70 or less. If the bulk filling rate is less than 0.40, the voids between the powders are large, and when applied to three-dimensional modeling, melting and sintering do not progress sufficiently, thereby causing voids in the model object or making it difficult to obtain the model object, and it is not preferred. f the bulk filling rate exceeds 0.70, the powder becomes excessively densely charged and is restrained, thereby impairing the flowability, and it is not preferred. The lower limit of the bulk filling rate is more preferably 0.41 or more, further preferably 0.42 or more, and particularly preferably 0.43 or more. Further, the upper limit is more preferably 0.65 or less, further preferably 0.62 or less, and particularly preferably 0.60 or less.

Where, in the present invention, the bulk density of the powder composition indicates a mass per unit volume when the powder is filled into a container. Here, the bulk density is determined by measuring the powder composition in accordance with the Japanese Industrial Standard (JIS standard) JIS K 7365 (1999) "How to determine the apparent density of materials that can be poured from a specified funnel".

In the present invention, the true density T(A) of the polyamide powder (A) and the true density T(B) of the inorganic reinforcing material (B) can use literature values, and for example, the values can be used such as 1.1 g/cm$^3$ for polyamide 6, 1.0 g/cm$^3$ for polyamide 12, 1.1 g/cm$^3$ for polyamide 1010, 1.1 g/cm$^3$ for polyamide 66, 1.0 g/cm$^3$ for polyamide 11, 2.6 g/cm$^3$ for glass fibers, 2.5 g/cm$^3$ for glass beads, and 1.8 g/cm$^3$ for carbon fibers.

As the methods for increasing the bulk filling rate, can be employed a method for using an inorganic reinforcing material with short fiber length and excellent in filling property, a method for using a flow aid with particle diameters of 100 nm to 300 nm and having an appropriate dispersion force, a method for using a polyamide powder with a high sphericity of 80 or more, a method for using a polyamide powder with a high melting point which has many amide bonds, a combination thereof, and the like.

Further, in the powder bed fusion method, a model object is made using a part of the powder composition used, and a large amount of the powder composition remains. Reusing the powder composition becomes important from the viewpoint of cost. For that, it is important not to change the properties of the powder composition during the heating and modeling process. As such methods, for example, exemplified are a method for suppressing thermal deterioration by compounding a stabilizer such as an antioxidant to the inside of the particle, a method for suppressing changes in molecular weight during modeling by reducing the terminal groups of a polyamide, etc. Further, it is preferred to use an inorganic reinforcing material which is not denatured by heat also with respect to the inorganic reinforcing material to be incorporated into the powder composition. By appropriately using such adjustments, it tends to be possible to achieve both modeling property and reuse.

The powder composition of the present invention is a material useful for producing a three-dimensional model object using a powder bed fusion method. Hereinafter, the method for producing a three-dimensional model object will be explained using Fig. 1.

In the step (a), a stage 2 of a vessel 1 in which the modeled object is formed is lowered.

In the step (b), a stage 4 of a vessel 3 (hereinafter, also referred to as a supply vessel) filled in advance with the powder composition P to be supplied to the vessel 1 forming the model object is raised by an amount of a height capable of supplying the powder composition P to the vessel 1 by an amount sufficient to fill the powder composition P into the vessel 1 by an amount corresponding to a predetermined layering height formed in the vessel 1. Then, a recoater 5 is moved from the left end of the supply vessel 3 to the right end of the vessel 1 to layer the powder composition P in the vessel 1. Where, the direction parallel to the movement of the recoater 5 is an X direction, and the direction perpendicular to the movement direction of the recoater 5 on the powder surface of the powder composition P is a Y direction. Symbol 7 indicates a coordinate system representing the X, Y and Z directions. Symbol 8 indicates the plane direction in which the powder composition is layered, and symbol 9 indicates the height direction in which the powder composition is layered.

In the step (c), the powder composition P filled in the vessel 1 by a predetermined layering height in the step (b) is imparted with a thermal energy 6 capable of being melted, and selectively melted and sintered according to a modeling data.

In the powder bed fusion method, by repeating the above-described steps (a) to (c), a three-dimensional model object 10 can be obtained.

As the method of selectively melting and sintering in the step (c), for example, a selective laser sintering method of irradiating a laser to a shape corresponding to the cross-sectional shape of the model object to join the powder composition can be exemplified. In addition, a selective absorption (or suppression) sintering method comprising a printing step of printing an energy absorption accelerator or an energy absorption inhibitor in a shape corresponding to the cross-sectional shape of the object to be modeled and a step of joining the resin powder using an electromagnetic radiation can be also exemplified.

The laser beam used in the selective laser sintering method is not particularly limited as long as it does not impair the quality of the powder composition or the model object. For example, exemplified are a carbon dioxide laser, a YAG laser, an excimer laser, a He-Cd laser, a semiconductor excitation solid-state laser, and the like. Among these, the carbon dioxide laser is preferred because it is simple to operate and easy to control.

Further, any electromagnetic radiation that does not impair the quality of the powder composition or the model object can be used for the selective absorption (suppression) sintering, but an infrared is preferred because an energy relatively inexpensive and suitable for modeling can be obtained. Further, the electromagnetic radiation may or may not be coherent.

The energy absorption accelerator is a substance which absorbs an electromagnetic radiation. As such a substance, exemplified are carbon black, carbon fiber, copper hydroxy phosphate, near-infrared absorbing dyes, near-infrared absorbing pigments, metal nanoparticles, polythiophenes, poly(p-phenylene sulfide), polyaniline, poly(pyrrole), polyacetylene, poly(p-phenylene vinylene), polyparaphenylene, poly(styrene sulfonate), poly(3,4-ethylenedioxy thiophene)-poly(styrene phosphonate)p-diethylamino benzaldehyde diphenyl hydrazone, or conjugated polymers comprising combinations thereof and the like, and these may be used alone or in combination of a plurality of them.

The energy absorption inhibitor is a substance which hardly absorbs an electromagnetic radiation. As such a substance, exemplified are substances that reflect an electromagnetic radiation such as titanium, heat insulating powders such as mica powder and ceramic powder, and water, and these may be used alone or in combination of a plurality of them.

These selective absorbers or selective inhibitors may be used alone or can be used in combination.

In the step of printing the selective absorber or selective inhibitor in a shape corresponding to the cross-sectional shape of the object to be modeled, a known technique such as inkjet can be used. In this case, the selective absorber or selective inhibitor may be used as it is or may be used after being dispersed or dissolved in a solvent.

A three-dimensional model object of the present invention can be obtained by modeling the powder composition of the present invention using a powder bed fusion method. Hereinafter, the three-dimensional model object of the present invention will be explained.

The surface roughness of the three-dimensional model object of the present invention is 20 $\mu$m or less. The smaller the surface roughness, the better the adhesion of the joint between the objects, so the surface roughness of the object is preferably 18 $\mu$m or less, more preferably 15 $\mu$m or less, further preferably 12 $\mu$m or less, and particularly preferably 10 $\mu$m or less. Further, the lower limit is not particularly limited, and a small one is preferable, but the lower limit is usually 1 $\mu$m .

Where, the surface roughness of the model object is determined by observing the surface of the model object using an optical microscope, converting the unevenness of the surface of the model object into a three-dimensional image using automatic synthesis mode, and then obtaining the height profile of the cross section over a length of 1 mm or more, and calculating a surface roughness Ra by arithmetic mean.

The elastic modulus in the X direction of the three-dimensional model object of the present invention is 3,500 MPa or more. The larger the elastic modulus, the higher the rigidity of the model object and the less deformation, and therefore, the elastic modulus of the model object in the X direction is preferably 3,800 MPa or more, more preferably 4,000 MPa or more, further preferably 4,500 MPa or more, and particularly preferably 5,000 MPa or more. Further, the upper limit thereof is not particularly limited, but in general, if the elastic modulus becomes too large, it tends to become brittle and have a lower strength, so it is preferably 20,000 MPa or less, more preferably 15,000 MPa or less, further preferably 12,000 MPa or less, and particularly preferably 10,000 MPa or less.

Where, in the present invention, the elastic modulus in the X direction is a flexural modulus measured in accordance with the method defined in the Japanese Industrial Standard (JIS standard) JIS K7171 (2016) "Plastics - Determination of flexural properties" with respect to a bending test piece modeled taking the aforementioned X direction in the three-dimensional modeling as the direction of the longest side thereof.

The flexural strength in the X direction of the three-dimensional model object of the present invention is preferably 65 MPa or more. The larger the X-direction flexural strength, the more it can withstand the force from the direction where the stress is most applied, and therefore, the X-direction flexural strength of the model object is more preferably 70 MPa or more, further preferably 80 MPa or more, particularly preferably 90 MPa or more, extremely preferably 100 MPa or more and most preferably 105 MPa or more.

The strength anisotropy of the three-dimensional model object of the present invention can be evaluated by Z-direction flexural strength/X-direction flexural strength. The larger the Z-direction flexural strength/X-direction flexural strength is, the better the handleability is without strength anisotropy, so it is preferably 0.4 or more, more preferably 0.5 or more, further preferably 0.6 or more, and particularly preferably 0.7 or more.

Where, in the present invention, the X-direction flexural strength and the Z-direction flexural strength are the values of the maximum bending stresses determined in accordance with the Japanese Industrial Standard (JIS standard) JIS K7171 (2016) "Plastics - Determination of flexural properties", with respect to a bending test piece modeled taking the aforementioned X direction as the direction of the longest side thereof and a bending test piece modeled taking the aforementioned Z direction as the direction of the longest side thereof, respectively.

The deflection temperature under load of the three-dimensional model object of the present invention is preferably 150°C or higher. The higher the deflection temperature under load, the less likely the model object is to deform in a high-temperature environment, so the deflection temperature under load of the model object is more preferably 170°C or higher, further preferably 185°C or higher, and particularly preferably 200°C or higher.

Where, in the present invention, the deflection temperature under load is a value measured at a load of 0.45 MPa in accordance with the Japanese Industrial Standard (JIS standard) JIS K7191-1 (2015) "Plastics - Determination of deflection temperature under load."

Further, in three-dimensional modeling, since a model object is formed by melting and sintering from a powder-filled state under a normal pressure, usually a change in density due to shrinkage is accompanied. Therefore, in order to obtain the dimensions of the three-dimensional model object with a high accuracy relative to desired modeling data, it is preferred to have appropriate voids inside. The ratio and shape of voids present in the three-dimensional model object of the present invention can be observed by X-ray CT.

The ratio of the portions observed as voids, when the three-dimensional model object of the present invention is imaged by X-ray CT, to the total volume of the model object can be expressed as a void ratio. The void ratio observed by X-ray CT imaging of the three-dimensional model object of the present invention is preferably 0.1% by volume or more and 10% by volume or less. If it is too small, there occurs a problem that the entire model object shrinks with respect to the modeling data, so the lower limit of the void ratio is more preferably 0.2% by volume or more, further preferably 0.3% by volume or more, and particularly preferably 0. 5% by volume or more. Further, since a large amount of voids causes a decrease in strength, the upper limit thereof is more preferably 5.0% by volume or less, further preferably 4.0% by volume or less, and particularly preferably 3.0% by volume or less.

When the three-dimensional model object of the present invention is imaged by X-ray CT, the size of each independent hole observed as a void can be expressed as a sphere equivalent diameter. The average sphere equivalent diameter of the voids observed by X-ray CT imaging in the three-dimensional model object of the present invention is characterized by being 1 $\mu$m or more and 100 $\mu$m or less. In case of melt molding not accompanying a three-dimensional modeling process, the average sphere equivalent diameter of voids is usually designed to be less than 1 $\mu$m, and in case of intentionally forming voids such as a foam molding, the average sphere equivalent diameter of voids usually becomes more than 100 $\mu$m, and therefore, the sphere equivalent diameter of 1 $\mu$m or more and 100 $\mu$m or less is a characteristic of the three-dimensional model object. As described above, in the three-dimensional modeling under a normal pressure, a certain amount of voids are generated, so the lower limit thereof is preferably 3 $\mu$m or more, more preferably 5 $\mu$m or more, and further preferably 10 $\mu$m or more. Since a large void becomes a defect and causes a decrease in the strength of the model object, the upper limit thereof is preferably 80 $\mu$m or less, more preferably 60 $\mu$m or less, and further preferably 50 $\mu$m or less.

Further, since a three-dimensional model object is obtained by crystallizing under a normal pressure and through a process of lowering the temperature at a slow rate as compared with a usual melt forming, the state of the crystals is different from that due to a usual melt forming. However, since it is difficult to express it as a feature of an object, it is specified by the production method, which is the three-dimensional modeling, preferably by the powder bed fusion method. Although it is known that in a usual melt molding, molded products with smooth surfaces and large elastic modulus can be obtained depending on the structure of the mold, in a three-dimensional modeling that can achieve a molding of complex shapes, it has not been possible to obtain a molded product with a smooth surface and a large elastic modulus, and this has been made possible for the first time by the present invention.

The three-dimensional model object of the present invention has both surface smoothness and high elastic modulus, has an excellent adhesion at joints between model objects, and exhibits a good airtightness. The three-dimensional model object obtained using the powder composition of the present invention can be effectively used for automobile parts which require high thermal resistance and elastic modulus, especially automobile engine peripheral parts, automobile under hood parts, automobile gear parts, automobile interior parts, automobile exterior parts, intake/exhaust system parts, engine cooling water system parts, and automobile electrical parts, and it is possible to obtain three-dimensional model objects with complex shapes that are optimally designed.

Examples:

Hereinafter, the present invention will be explained based on examples.

(1) D50 particle diameter of polyamide powder:

A dispersion prepared in advance by dispersing about 100 mg of polyamide powder in about 5 mL of deionized water was added to a measuring device of a laser diffraction particle diameter distribution analyzer (Microtrac MT3300EXII) supplied by Nikkiso Co., Ltd. until it reached a measurable concentration, and after carrying out ultrasonic dispersion for 60 seconds at 30W in the measuring device, the particle diameter at which the cumulative frequency from the small particle diameter side of the particle diameter distribution measured in 10 seconds of measurement time became 50% was defined as D50 particle diameter. Where, the refractive index at the time of measurement was 1.52, and the refractive index of the medium (deionized water) was 1.333.

(2) Sphericity of polyamide powder:

The sphericity of the polyamide powder was determined by observing 30 particles at random from a photograph taken with a scanning electron microscope (JSM-6301NF) supplied by JEOL Ltd., and calculating it from the minor axis diameters and the major axis diameters thereof according to the following equation.

[Equation 3]

$$S = \sum_{i=1}^{n}(b/a)/\mathrm{n} \times 100$$

Where, in the above-described equation, S: sphericity, a: major axis diameter, b: minor axis diameter, and n: number of measurements which is 30.

(3) BET specific surface area:

According to the Japanese Industrial Standard (JIS standard) JISR1626 (1996) "Method for determining specific surface area by gas adsorption BET method", about 0.2g of polyamide powder was placed in a glass cell using BELSORP-max supplied by Bell Japan Co., Ltd., and after degassing under reduced pressure at 80°C for about 5 hours, the krypton gas adsorption isotherm at a liquid nitrogen temperature was measured and it was calculated by BET method.

(4) Average major axis diameter and average minor axis diameter of inorganic reinforcing material:

The inorganic reinforcing material was observed with a scanning electron microscope (JSM-6301NF) supplied by JEOL Ltd., and the average values of the major axis diameters and minor axis diameters of 100 inorganic reinforcing materials randomly selected from the photograph were determined as the average major axis diameter and average minor axis diameter.

(5) Constituent elements of inorganic reinforcing material:

The image of the inorganic reinforcing material was taken by a scanning electron microscope (Regulus 8220) supplied by Hitachi High-Technologies Corporation and an energy dispersive X-ray analyzer ("X Flash" (registered trademark) 5060FlatQUAD supplied by BRUKER Corporation) at an acceleration voltage of 5 kV and a measurement time of 180 seconds. From the obtained spectrum data, the peak at 1.49 keV was assigned to the aluminum element, and the peak at 1.74 keV was assigned to the silicon element, and if a peak of 1 cps/eV or more was detected, it was determined that each element was contained.

(6) D50 particle diameter of flow aid:

A sample in which the flow aid was dispersed in a deionized water or ethanol at a concentration of 0.1% by weight was measured by a dynamic ray scattering method using a zeta potential/particle diameter analyzer (ELSZ-2) supplied by Otsuka Electronics Co., Ltd., and the particle diameter at which the cumulative frequency from the small particle diameter side of the particle diameter distribution became 50% was determined as the D50 particle diameter.

(7) Bulk density and bulk filling rate of powder composition:

The bulk density of the powder composition was determined by dropping 50g of polymer powder from a funnel into a 100 cm$^3$ graduated cylinder, reading the volume, and calculating a value dividing the weight of the powder composition with the volume as it, in accordance with the Japanese Industrial Standard (JIS standard) JIS Z 7365 (1999). When a true density of the polyamide powder (A) was referred to T(A), a true density of the inorganic reinforcing material (B) was referred to T(B), a content of the inorganic reinforcing material (B) was referred to X(B), and the bulk density of the powder composition was referred to D, the bulk filling rate was calculated by $D/\{T(A) \times (100-X(B))/100 + T(B) \times X(B)/100\}$. Where, as the bulk density, the values of 1.1 g/cm$^3$ for polyamide 6, 1.0 g/cm$^3$ for polyamide 12, 1.1 g/cm$^3$ for polyamide 1010, 1.1 g/cm$^3$ for polyamide 66, 1.0 g/cm$^3$ for polyamide 11, 2.6 g/cm$^3$ for glass fibers, 2.5 g/cm$^3$ for glass beads, and 1.8 g/cm$^3$ for carbon fibers were used.

(8) Determination of appearance of model object:

In the obtained three-dimensional model object, in case where there were no defects or spots of 1 mm or more, it was ranked as "◎", in case where there were no defects of 1 mm or more but there were some spots partially, it was ranked as "o", and in case where there were defects of 1 mm or more, it was ranked as "Δ". Ranks "◎" and "o" were determined to be acceptable.

(9) Determination of warping of model object:

The obtained test piece was placed stationarily on a horizontal plane at a state of an upward convex, a precision taper gauge was inserted into the gap between the horizontal plane and the test piece, the height of the gap was measured, it was converted to a value per 10 cm of the length of the test piece and calculated as the amount of warping, and the amount of warping was evaluated according to the following criteria.

o: The amount of warping is 0.1 mm/10 cm or less.
Δ: The amount of warping is greater than 0.1 mm/10 cm and 0.3 mm/10 cm or less.
×: The amount of warping is greater than 0.3 mm/10 cm.
Ranks "o" and "Δ" were determined to be acceptable.

(10) Surface roughness of modeled object:

The surface of the model object was observed at a magnification of 200 times using an optical microscope (VHX-5000) supplied by Keyence Corporation and its objective lens of VH-ZST (ZS-20). Using a software attached to the device (system version 1.04), after converting the unevenness of the surface of the model object into a three-dimensional image with the automatic synthesis mode, the height profile of the cross section was taken over a length of 1 mm or more, and the surface roughness Ra was calculated as an arithmetic average. The smaller the surface roughness Ra, the more excellent the smoothness f the surface.

(11) Measurement of flexural modulus and flexural strength of model object:

With respect to the flexural modulus and flexural strength of the three-dimensional model object, using a powder bed fusion method 3D printer (RaFaElII 150C-HT) supplied by Aspect Inc., a test piece with a width of 10 mm, a length of 80 mm, and a thickness of 4 mm was prepared so that the 80 mm lengthwise direction became X or Z direction, each flexural modulus and flexural strength in the X and Z directions were measured using a TENSIRON universal testing machine (TENSIRON TRG-1250) supplied by A&D Co., Ltd. In accordance with JIS K7171 (2016), the flexural modulus was determined by performing a three-point bending test under the conditions of a distance between fulcrums of 64 mm and a test speed of 2 mm/min. Further, the flexural strength was defined as the maximum flexural stress. The measurement temperature was a room temperature (23°C), the number of measurements was n=5, and the average value was determined.

(12) Deflection temperature under load of model object:

The deflection temperature under load of the three-dimensional model object was determined by using a powder bed fusion method 3D printer (RaFaElII 150C-HT) supplied by Aspect Inc. to prepare a test piece with a width of 10 mm, a length of 80 mm, and a thickness of 4 mm so that the 80 mm lengthwise direction became the X direction, and being measured using a heat distortion tester (No. 148) supplied by Yasuda Seiki Seisakusho Co., Ltd. at a load of 0.45 MPa in accordance with JIS K7191-1 (2015). The number of measurements was n=3, and the average value was determined.

(13) Measurement of average sphere equivalent diameter and void ratio of voids in the model object:
Three-dimensional transmitted image observation was performed using an X-ray CT device (Xradia 510 Versa) supplied by ZEISS Corporation at a resolution of 5 $\mu$m, a field of view of 5 mm, a voltage of 80 kV, and a power of 7W. The void portion of the observed image was subjected to labeling processing, and the sphere equivalent diameter, which was the diameter of each independent void as a sphere, was calculated, and the average value was determined as the average sphere equivalent diameter of the voids. Further, the void ratio was determined by dividing the volume of the void area subjected to the above-described labeling processing by the total volume filled with the void area in the portion corresponding to the model object in the observed image, and multiplying the value by 100 to calculate the void ratio.

(14) MIX ratio of recycle modeling:
The used powder remaining in the modeling chamber after modeling using a powder bed fusion method 3D printer (RaFaEllI 150C-HT) supplied by Aspect Inc. was recycled, and after it was mixed with unused powder at a certain ratio, the three-dimensional modeling was performed again. Here, when the change of the surface roughness, the flexural modulus or the flexural strength of the model object obtained became 10% or less as compared with a case when modeled only with unused powder, the recycle modeling was determined as "o". The mixing ratio of the used powder when the recycle modeling became "o" was defined as the MIX ratio.

[Production Example 1]

Into an autoclave equipped with a 3L helical ribbon type stirring blade, 300g of $\varepsilon$-caprolactam (supplied by FUJIFILM Wako Pure Chemical Corporation) as a polyamide monomer, and 700g of polyethylene glycol (supplied by FUJIFILM Wako Pure Chemical Corporation, primary polyethylene glycol 20,000, weight average molecular weight: 18,600)) as a polymer incompatible with polyamide, and 1,000g of water were added to form a uniform solution, it was then sealed and replaced with nitrogen. Thereafter, the stirring speed was set at 40 rpm and the temperature was elevated to 210°C. At this time, after the system pressure reached 10 kg/cm$^2$, the system was controlled so that the pressure maintained at 10 kg/cm$^2$, while water vapor was slightly released. After the temperature reached 210°C, the pressure was released at a rate of 0.2 kg/cm$^2$·min. Thereafter, the temperature was maintained for 1 hour while flowing nitrogen to complete polymerization, and a slurry was obtained from the mixture of the polyamide powder and the polyethylene glycol by discharging it into a 2,000g water bath while the polyethylene glycol remained at a molten state. After the slurry was sufficiently homogenized by stirring, it was filtered, 2,000g of water was added to the filtered product, and it was washed at 80°C. Thereafter, the slurry liquid from which aggregates were removed through a 100 $\mu$m sieve was filtered again, and the isolated filtered product was dried at 80°C for 12 hours to produce 170g of polyamide 6 powder. The D50 particle diameter of the obtained polyamide powder was 51 $\mu$m, the D90/D10 was 2.5, the sphericity was 95, the BET specific surface area was 0.16 m$^2$/g, and R=1.3.

[Production Example 2]

Polyamide 12 powder was prepared in the same manner as in Production Example 1, other than the conditions where $\varepsilon$-caprolactam used as the polyamide monomer was changed to amino dodecanoic acid (supplied by FUJIFILM Wako Pure Chemical Corporation), and the polymerization temperature was changed to 210°C. The D50 particle diameter of the obtained polyamide powder was 55 $\mu$m and the sphericity was 97.

[Production Example 3]

Polyamide 1010 powder was prepared in the same manner as in Production Example 1, other than the conditions where $\varepsilon$-caprolactam used as the polyamide monomer was changed to 162g of sebacic acid (supplied by Tokyo Kasei Kogyo Co., Ltd.) and 138g of diamino decane (supplied by Tokyo Kasei Kogyo Co., Ltd.), and the polymerization temperature was changed to 210°C. The D50 particle diameter of the obtained polyamide powder was 49 $\mu$m and the sphericity was 93.

[Production Example 4]

Polyamide 66 powder was prepared in the same manner as in Production Example 1, other than the conditions where $\varepsilon$-caprolactam used as the polyamide monomer was changed to 170g of adipic acid (supplied by Tokyo Kasei Kogyo Co., Ltd.) and 260g of a 50% aqueous solution of hexamethylene diamine (supplied by Tokyo Kasei Kogyo Co., Ltd.), and the polymerization temperature was changed to 230°C. The D50 particle diameter of the obtained polyamide powder was 49 $\mu$m and the sphericity was 91.

[Production Example 5]

Polyamide 11 powder was prepared in the same manner as in Production Example 1, other than the conditions where ε-caprolactam used as the polyamide monomer was changed to amino undecanoic acid (supplied by FUJIFILM Wako Pure Chemical Corporation), and the polymerization temperature was changed to 210°C. The D50 particle diameter of the obtained polyamide powder was 51 μm and the sphericity was 92.

[Production Example 6]

Polyamide 12 powder was prepared in the same manner as in Production Example 1, other than the conditions where ε-caprolactam used as the polyamide monomer was changed to 600g of ω-laurin lactam (supplied by Tokyo Kasei Kogyo Co., Ltd.), 400g of polyethylene glycol, and 80g of water, and the initial heating temperature was changed to 280°C. The D50 particle diameter of the obtained polyamide powder was 53 μm and the sphericity was 91.

[Example 1]

1,050g of polyamide 6 powder prepared in Production Example 1 as the polyamide powder (A), and 450g of glass fibers EPG40M-10A (supplied by Nippon Electric Glass Co., Ltd., average major axis diameter: 43 μm, average minor axis diameter: 10 μm) as the inorganic reinforcing material (B), were mixed. Further, 4.5 g of trimethyl silylated amorphous silica X-24-9500 (supplied by Shin-Etsu Chemical Co., Ltd., D50 particle diameter: 170 nm) was added as the flow aid (C) to prepare a powder composition. Using 1.5 kg of this powder composition, a three-dimensional model object was produced using a powder bed fusion bonding device (RaFaElII 150C-HT) supplied by Aspect Inc. As the setting conditions, 60W $CO_2$ laser was used, the layering height was 0.1 mm, the laser scanning space was 0.1 mm, the laser scanning speed was 5 m/s, and the laser power was 12W. As the temperature setting, the component bed temperature was set at -15°C from the melting point, and the supply vessel temperature was set at -5°C from the crystallization temperature. The appearance of the obtained three-dimensional model object was good, the surface roughness was 9 μm, the elastic modulus in the X direction was 5,600 MPa, the flexural strength in the X direction was 151 MPa, the flexural strength in the Z direction was 115 MPa, the deflection temperature under load was 217°C, the void rate in X-ray CT was 1.2% by volume, and the equivalent sphere diameter of voids was 34 μm. Further, when the used powder was recycled and mixed with unused powder and the MIX ratio of recycle modeling was evaluated, the MIX ratio was 70%. The powder used, the properties of the model object obtained, and the MIX ratio, which is the recycling property, are shown in Table 1.

[Example 2]

The three-dimensional model object was prepared in the same manner as in Example 1, other than conditions where 750 g of polyamide 12 powder of Production Example 2 was used as the polyamide powder (A), and 750 g of glass fibers EPG40M-10A was used as the inorganic reinforcing material (B). and the recycling property was evaluated. The powder used, the properties of the model object obtained, and the MIX ratio, which is the recycling property, are shown in Table 1.

[Example 3]

The three-dimensional model object was prepared in the same manner as in Example 1, other than a condition where the blending composition was changed to 1,200g of the polyamide powder (A), 300g of glass fibers EPG70M-01N (supplied by Nippon Electric Glass Co., Ltd., average major axis diameter: 73 μm, average minor axis diameter: 10 μm) as the inorganic reinforcing material (B), and 3.0g of the flow aid (C), and the recycling property was evaluated. The powder used, the properties of the model object obtained, and the MIX ratio, which is the recycling property, are shown in Table 1.

[Example 4]

The three-dimensional model object was prepared in the same manner as in Example 1, other than a condition where the blending composition was changed to 900g of the polyamide powder (A), 600g of glass fibers EPH80N (supplied by Nippon Electric Glass Co., Ltd., average major axis diameter: 88 μm, average minor axis diameter: 11 μm) as the inorganic reinforcing material (B), and 7.5g of the flow aid (C), and the recycling property was evaluated. The powder used, the properties of the model object obtained, and the MIX ratio, which is the recycling property, are shown in Table 1.

[Example 5]

The three-dimensional model object was prepared in the same manner as in Example 1, other than a condition where the blending composition was changed to 900g of the polyamide powder (A), 480g of glass beads GB731A (supplied by Potters-Ballotini Co., Ltd., average major axis diameter: 27 $\mu$m, average minor axis diameter: 26 $\mu$m) as the inorganic reinforcing material (B), and 1.5g of the flow aid (C), and the recycling property was evaluated. The powder used, the properties of the model object obtained, and the MIX ratio, which is the recycling property, are shown in Table 1.

[Example 6]

The three-dimensional model object was prepared in the same manner as in Example 1, other than a condition where the blending composition was changed to 1,050g of the polyamide powder (A), 450g of glass fibers EPG70M-01N as the inorganic reinforcing material (B), and 4.5g of fumed silica "AEROSIL (registered trademark)" R972 as the flow aid (C), and the recycling property was evaluated. The powder used, the properties of the model object obtained, and the MIX ratio, which is the recycling property, are shown in Table 1.

[Example 7]

The three-dimensional model object was prepared in the same manner as in Example 5, other than a condition where the polyamide powder (A) was changed to the polyamide 1010 powder of Production Example 3, and the recycling property was evaluated. The powder used, the properties of the model object obtained, and the MIX ratio, which is the recycling property, are shown in Table 1.

[Example 8]

The three-dimensional model object was prepared in the same manner as in Example 1, other than conditions where 900g of polyamide 66 powder of Production Example 4 was used as the polyamide powder (A), 600g of glass beads GB731 (supplied by Potters-Ballotini Co., Ltd., average major axis diameter: 31 $\mu$m, average minor axis diameter: 31 $\mu$m) were used as the inorganic reinforcing material (B), and the content of the flow aid (C) was changed to 0.75g, and the recycling property was evaluated. The powder used, the properties of the model object obtained, and the MIX ratio, which is the recycling property, are shown in Table 1.

[Example 9]

The three-dimensional model object was prepared in the same manner as in Example 6, other than conditions where the polyamide powder (A) was changed to 750g of polyamide 6 powder of Production Example 1, the inorganic reinforcing material (B) was changed to 750g of glass beads GB731A, and the content of the flow aid (C) was changed to 1.5g, and the recycling property was evaluated. The powder used, the properties of the model object obtained, and the MIX ratio, which is the recycling property, are shown in Table 1.

[Example 10]

The three-dimensional model object was prepared in the same manner as in Example 6, other than conditions where polyamide 6 powder of Production Example 1 was used as the polyamide powder (A), and the flow aid (C) was not blended, and the recycling property was evaluated. The powder used, the properties of the model object obtained, and the MIX ratio, which is the recycling property, are shown in Table 1.

[Example 11]

The three-dimensional model object was prepared in the same manner as in Example 9, other than conditions where the polyamide powder (A) was changed to 1,050g of polyamide 11 powder of Production Example 5, and the content of the glass beads GB731A as the inorganic reinforcing material (B) was changed to 450g, and the recycling property was evaluated. The powder used, the properties of the model object obtained, and the MIX ratio, which is the recycling property, are shown in Table 1.

[Example 12]

The three-dimensional model object was prepared in the same manner as in Example 9, other than conditions where the polyamide powder (A) was changed to 900g of polyamide 12 powder of Production Example 6, and the content of the glass beads GB731A as the inorganic reinforcing material (B) was changed to 600g, and the recycling property was evaluated. The powder used, the properties of the model object obtained, and the MIX ratio, which is the recycling property, are shown in Table 1.

[Example 13]

The three-dimensional model object was prepared in the same manner as in Example 1, other than a condition where the blending composition was changed to 1,125g of the polyamide powder (A), 375g of carbon fibers Panex35 (supplied by Zoltek Corporation, average major axis diameter: 80 $\mu$m, average minor axis diameter: 7$\mu$m) as the inorganic reinforcing material (B), and 4.5g of the flow aid (C), and the recycling property was evaluated. The powder used, the properties of the model object obtained, and the MIX ratio, which is the recycling property, are shown in Table 1.

[Comparative Example 1]

The three-dimensional model object was prepared in the same manner as in Example 1, other than conditions where 1,500 g of polyamide 1010 powder of Production Example 3 was used as the polyamide powder (A), no inorganic reinforcing material (B) was blended, and the content of the flow aid (C) was changed to 1.5g, and the recycling property was evaluated. The obtained model object was significantly warped. The powder used, the properties of the model object obtained, and the MIX ratio, which is the recycling property, are shown in Table 1.

[Comparative Example 2]

Polyamide "Amilan (registered trademark)" CM1007 supplied by Toray Industries, Inc. was pulverized for 120 minutes with a jet mill (100AFG supplied by Hosokawa Micron Corporation) to obtain pulverized polyamide 6 powder with a D50 particle diameter of 50 $\mu$m and a sphericity of 60. The three-dimensional model object was prepared in the same manner as in Example 6, other than a condition where the polyamide powder (A) was changed to this pulverized polyamide 6 powder, and the recycling property was tried to be evaluated. However, the powder composition used had a poor flowability, and further, sintering when modeling was obstructed, thereby making it impossible to obtain a model object.

[Comparative Example 3]

The three-dimensional model object was prepared in the same manner as in Example 9, other than conditions where the pulverized polyamide 6 powder of Comparative Example 2 was used as the polyamide powder (A), and the inorganic reinforcing material (B) was changed to glass beads GB731, and the recycling property was evaluated. The obtained model object had a surface roughness of 31 $\mu$m and it was insufficient in surface smoothness. The powder used, the properties of the model object obtained, and the MIX ratio, which is the recycling property, are shown in Table 1.

[Comparative Example 4]

The three-dimensional model object was prepared in the same manner as in Example 9, other than a condition where the blending composition was changed to 1,450g of the polyamide powder (A) and 45g of the inorganic reinforcing material (B), and the recycling property was evaluated. The obtained model object had an elastic modulus in the X direction of 3,200 MPa, which was insufficient. The powder used, the properties of the model object obtained, and the MIX ratio, which is the recycling property, are shown in Table 1.

[Comparative Example 5]

The three-dimensional model object was prepared in the same manner as in Example 5, other than a condition where a chopped strand T-275H (supplied by Nippon Electric Glass Co., Ltd., average major axis diameter: 3,000 $\mu$m, average minor axis diameter: 10 $\mu$m) was pulverized with a pestle in a mortar for giving an average major axis diameter of 420 $\mu$m, and it was used as the inorganic reinforcing material (B). When this powder was repeatedly used for recycling, the glass fibers agglomerated and did not flow, not making it possible to be used for modeling. The powder used, the properties of the model object obtained, and the MIX ratio, which is the recycling property, are shown in Table 1.
Where, in the kind of reinforcing material in Table 1, GF indicates glass fibers, GB indicates glass beads, and CF indicates carbon fibers, respectively.

[Table 1]

| (A) | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|
| | Kind of polyamide | PA6 | PA12 | PA6 | PA6 | PA6 | PA6 | PA1010 | PA66 | PA6 | PA6 | PAII | PA12 | PA6 | PA1010 | PA6 | PA6 | PA6 | PA6 |
| | D50 particle diameter (μm) | 51 | 55 | 51 | 51 | 51 | 51 | 49 | 49 | 51 | 51 | 51 | 33 | 51 | 49 | 50 | 50 | 51 | 51 |
| | Sphericity | 95 | 97 | 95 | 95 | 95 | 95 | 93 | 91 | 95 | 95 | 92 | 91 | 95 | 93 | 60 | 60 | 95 | 95 |

(continued)

|  |  | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|
| (B) | Kind of reinforcing material | OF | OF | OF | OF | Mixture of GF/GB | OF | OF | GB | GB | GB | GB | GB | CF | Non-reinforced | GF | GB | GF | OF |
| | Surface treatment | Present | Present | None | Present | Present | None | None | None | Present | None | None | None | None | - | None | None | None | Present |
| | Average major axis diameter (μm) | 43 | 43 | 73 | 88 | 34 | 73 | 73 | 31 | 27 | 31 | 31 | 31 | 80 | - | 73 | 31 | 73 | 420 |
| | Average major axis diameter / Average minor axis diameter | 4 | 4 | 7 | 8 | 2 | 7 | 7 | 1 | 1 | 1 | 1 | 1 | 11 | - | 7 | 1 | 7 | 42 |
| | Content (% by weight) | 30 | 50 | 20 | 40 | 40 | 30 | 30 | 40 | 50 | 40 | 30 | 40 | 25 | 0 | 30 | 40 | 3 | 30 |
| (C) | D50 particle diameter (nm) | 170 | 170 | 170 | 170 | 170 | 20 | 170 | 170 | 170 | - | 170 | 170 | 170 | 170 | 20 | 170 | 170 | 170 |
| | Content (% by weight) | 0.30 | 0.30 | 0.20 | 0.50 | 0.10 | 0.30 | 0.30 | 0.05 | 0.10 | 0.00 | 0.10 | 0.10 | 0.30 | 0.10 | 0.30 | 0.10 | 0.10 | 0.10 |

| | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|
| Powder composition | Bulk density (g/cm$^3$) | 0.69 | 0.75 | 0.71 | 0.73 | 0.77 | 0.65 | 0.68 | 0.85 | 0.92 | 0.78 | 0.81 | 0.86 | 0.56 | 0.59 | 0.54 | 0.71 | 0.63 | 0.61 |
| | Bulk filling rate | 0.45 | 0.42 | 0.51 | 0.43 | 0.46 | 0.42 | 0.44 | 0.51 | 0.51 | 0.47 | 0.56 | 0.54 | 0.43 | 0.54 | 0.35 | 0.43 | 0.55 | 0.39 |
| Model object | Appearance | ◎ | ◎ | ◎ | ◎ | ◎ | ○ | ◎ | ◎ | ◎ | ○ | ◎ | ◎ | ◎ | ○ | - | ○ | ◎ | ○ |
| | Warping | ○ | ○ | ○ | ○ | ○ | ○ | ○ | Δ | Δ | Δ | Δ | Δ | ○ | x | - | Δ | Δ | o |
| | Shrinkage in X direction (%) | 0.4 | 0.2 | 1.2 | 0.5 | 1.6 | 1.1 | 1.0 | 3.2 | 2.6 | 2.8 | 2.7 | 2.6 | 1.0 | 3.1 | - | 30 | 2.9 | 0.2 |
| | Surface roughness (μm) | 9 | 9 | 12 | 11 | 8 | 10 | 10 | 11 | 10 | 16 | 11 | 12 | 13 | 9 | - | 31 | 9 | 24 |
| | Flexural modulus in X direction (MPa) | 5600 | 4100 | 4700 | 7600 | 6300 | 5300 | 4500 | 5500 | 6600 | 4800 | 3600 | 3800 | 6800 | 2100 | - | 4600 | 3200 | 5900 |
| | Flexural strength in X direction (MPa) | 151 | 89 | 115 | 138 | 116 | 104 | 92 | 94 | 109 | 79 | 63 | 65 | 119 | 75 | - | 71 | 109 | 110 |

| | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|
| | Flexural strength in Z direction (MPa) | 115 | 57 | 81 | 79 | 101 | 68 | 63 | 74 | 88 | 61 | 55 | 56 | 79 | 58 | - | 57 | 79 | 43 |
| | Deflection temperature under load (°C) | 217 | 170 | 216 | 215 | 214 | 216 | 191 | 251 | 213 | 203 | 185 | 166 | 217 | 175 | - | 204 | 202 | 214 |
| | Sphere equivalent diameter of void (($\mu$m) | 34 | 32 | 33 | 31 | 29 | 38 | 34 | 32 | 36 | 41 | 39 | 34 | 35 | 31 | - | 39 | 33 | 42 |
| | Void rate (% by volume) | 1.2 | 1.7 | 1.3 | 2.1 | 1.8 | 4.6 | 2.2 | 2.5 | 1.4 | 2.0 | 2.3 | 2.2 | 2.1 | 2.3 | - | 5.1 | 1.9 | 6.3 |
| MIX ratio of recycle modeling | | 70 | 70 | 80 | 70 | 80 | 70 | 80 | 80 | 70 | 70 | 80 | 80 | 50 | 80 | - | 60 | 80 | Not possible |

EP 4 372 029 A1

Industrial Applicability

The model object obtained using the powder composition of the present invention has an excellent surface smoothness and a high elastic modulus, and further, the powder having been used for modeling can also be used for recycling at a high rate, and therefore, it can be effectively used as a powder raw material for a three-dimensional model object for industrial applications and the like. In particular, since it has a high elastic modulus of 3,500 MPa or more, it is also possible to use it as a structural member.

Explanation of symbols

1: vessel for forming model object
2: stage of vessel for forming model object
3: supply vessel filled in advance with powder composition being supplied
4: stage of vessel filled in advance with powder composition being supplied
5: recoater
6: thermal energy
7: X, Y, Z coordinate system
8: plane direction in which powder composition is layered
9: height direction in which powder composition is layered
10: three-dimensional model object
P: powder composition

## Claims

1. A powder composition comprising a polyamide powder (A) and an inorganic reinforcing material (B), wherein the polyamide powder (A) has a D50 particle diameter of 1 $\mu$m or more and 100 $\mu$m or less and a sphericity of 80 or more and 100 or less, the inorganic reinforcing material (B) has an average major axis diameter of 3 $\mu$m or more and 300 $\mu$m or less and an (average major axis diameter)/(average minor axis diameter) ratio of 1 or more and 15 or less, and the inorganic reinforcing material (B) is contained at an amount of 5% by weight or more and 60% by weight or less relative to the total weight of the powder composition.

2. The powder composition according to claim 1, wherein the powder composition contains a flow aid (C) at an amount of 0.01% by weight or more and 2.0% by weight or less relative to the total weight of the powder composition.

3. The powder composition according to claim 2, wherein the flow aid (C) has a D50 particle diameter of 10 nm or more and 3,000 nm or less.

4. The powder composition according to any one of claims 1 to 3, wherein, when a true density of the polyamide powder (A) is referred to T(A), a true density of the inorganic reinforcing material (B) is referred to T(B), a content of the inorganic reinforcing material (B) is referred to X(B), and a bulk density of the powder composition is referred to D, a bulk filling rate represented by $D/\{T(A) \times (100\text{-}X(B))/100 + T(B) \times X(B)/100\}$ is 0.40 or more and 0.70 or less.

5. The powder composition according to any one of claims 1 to 4, wherein the inorganic reinforcing material (B) contains silicon and aluminum as constituent elements.

6. The powder composition according to any one of claims 1 to 5, wherein the inorganic reinforcing material (B) has an average major axis diameter of 10 $\mu$m or more and 100 $\mu$m or less.

7. The powder composition according to any one of claims 1 to 6, wherein the inorganic reinforcing material (B) is glass fiber or glass beads.

8. The powder composition according to any one of claims 2 to 7, wherein the flow aid (C) is silica.

9. A method for producing a three-dimensional model object by powder bed fusion method using the powder composition according to any one of claims 1 to 8.

**10.** The method for producing a three-dimensional model object according to claim 9, wherein a surface roughness of a three-dimensional model object to be obtained is 20 $\mu$m or less and an elastic modulus in an X direction thereof is 3,500 MPa or more.

**11.** Athree-dimensional model object obtained by powder bed fusion method, having a surface roughness of 20 $\mu$m or less, an elastic modulus in an X direction of 3,500 MPa or more, and an average sphere equivalent diameter of voids observed by X-ray CT imaging of 1 $\mu$m or more and 100 $\mu$m or less.

**12.** The three-dimensional model object according to claim 11, wherein a content of voids observed by X-ray CT imaging is 0.1% by volume or more and 10% by volume or less.

# FIG. 1

# FIG. 2

## INTERNATIONAL SEARCH REPORT

| International application No. |
| --- |
| **PCT/JP2022/027661** |

**A. CLASSIFICATION OF SUBJECT MATTER**

*C08G 69/00*(2006.01)i; *C08L 77/00*(2006.01)i; *B33Y 10/00*(2015.01)i; *B33Y 80/00*(2015.01)i; *B29C 64/153*(2017.01)i; *B29C 64/165*(2017.01)i; *B29C 64/314*(2017.01)i; *C08K 3/013*(2018.01)i; *B33Y 70/10*(2020.01)i

FI: B29C64/153; B29C64/314; B33Y80/00; B33Y70/10; B33Y10/00; B29C64/165; C08L77/00; C08K3/013; C08G69/00

According to International Patent Classification (IPC) or to both national classification and IPC

**B. FIELDS SEARCHED**

Minimum documentation searched (classification system followed by classification symbols)

B29C64/00-64/40; B33Y10/00-99/00; C08G69/00; C08L77/00; C08K3/013

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2021/090768 A1 (TORAY INDUSTRIES, INC.) 14 May 2021 (2021-05-14) claims, paragraphs [0018]-[0052], [0083]-[0118] | 1-12 |
| Y | JP 2020-536153 A (ARKEMA FRANCE) 10 December 2020 (2020-12-10) claims, paragraphs [0001]-[0102] | 1-10 |
| Y | claims, paragraphs [0004], [0095]-[0113] | 11-12 |
| Y | JP 2018-196983 A (RICOH CO LTD) 13 December 2018 (2018-12-13) claims, paragraphs [0048]-[0064] | 1-10 |
| Y | paragraph [0049] | 11-12 |
| A | JP 2021-53887 A (TORAY INDUSTRIES, INC.) 08 April 2021 (2021-04-08) entire text | 1-12 |
| P, A | JP 2022-15603 A (DAIKIN IND LTD) 21 January 2022 (2022-01-21) entire text | 11-12 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 September 2022** | **27 September 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/027661**

---

**Box No. III     Observations where unity of invention is lacking (Continuation of item 3 of first sheet)**

This International Searching Authority found multiple inventions in this international application, as follows:

Document 1: WO 2021/090768 A1 (TORAY INDUSTRIES, INC.) 14 May 2021 (2021-05-14) claims, paragraphs [0018]-[0052], [0083]-[0118] (Family: none)

Claims are classified into the following two inventions.

(Invention 1) Claims 1-10
Claim 1 has the technical feature of a "powder composition comprising polyamide powder (A) and an inorganic reinforcing material (B), wherein the polyamide powder (A) has a D50 particle diameter of 1 μm to 100 μm and a sphericity of 80 to 100, the inorganic reinforcing material (B) has an average major axis diameter of 3 μm to 300 μm, and also has the average major axis diameter/average minor axis diameter of 1 to 15, and 5 wt% to 60 wt% of the inorganic reinforcing material (B) is included relative to the total weight of the powder composition," and the technical feature makes a contribution over the prior art, and is thus a special technical feature. Claims 2-10 referring to claim 1 have the same technical feature as above.
Thus, claims 1-10 are classified as invention 1.

(Invention 2) Claims 11-12
The invention in claim 11 shares, with claim 1 classified as invention 1, the common technical feature of "powder." However, said technical feature does not make a contribution over the prior art in light of the disclosure of document 1, and thus cannot be said to be a special technical feature.
Furthermore, there are no other same or corresponding special technical features between these inventions.
In addition, claims 11-12 are not dependent on claim 1. Furthermore, claims 11-12 are not substantially identical to or similarly closely related to any of the claims classified as invention 1.
Therefore, claims 11-12 are classified as Invention 2.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**    [ ] The additional search fees were accompanied by the applicant's protest and, where applicable, the payment of a protest fee.

[ ] The additional search fees were accompanied by the applicant's protest but the applicable protest fee was not paid within the time limit specified in the invitation.

[✓] No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2022/027661**

| Patent document cited in search report | | | Publication date (day/month/year) | Patent family member(s) | | | Publication date (day/month/year) |
|---|---|---|---|---|---|---|---|
| WO | 2021/090768 | A1 | 14 May 2021 | (Family: none) | | | |
| JP | 2020-536153 | A | 10 December 2020 | US claims, paragraphs [0001]-[0168] | 2020/0255660 | A1 | |
| JP | 2018-196983 | A | 13 December 2018 | US claims, paragraphs [0077]-[0107] EP | 2018/0022024 3272788 | A1 A1 | |
| JP | 2021-53887 | A | 08 April 2021 | (Family: none) | | | |
| JP | 2022-15603 | A | 21 January 2022 | WO entire text | 2022/009781 | A1 | |

Form PCT/ISA/210 (patent family annex) (January 2015)

**EP 4 372 029 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008266645 A
- JP 2020536153 A
- WO 2018207728 A